# DEMANDE DE BREVET EUROPEEN

(11) **EP 3 670 601 A1**
(43) Date de publication de la demande: **24.06.2020**
(21) Numéro de dépôt: 19218499.2
(22) Date de dépôt: 20.12.2019
(51) Int. Cl.: C08L 23/04, C08L 23/06, C08L 23/20, H01B 3/44, H01B 7/38

(54) **CÂBLE COMPRENANT UNE COUCHE SEMI-CONDUCTRICE FACILEMENT PELABLE**

(30) Priorité: 21.12.2018 FR 1873986
(71) Demandeur: Nexans, 92400 Courbevoie (FR)
(72) Inventeur: KOELBLIN, Christian, 01800 Meximieux (FR); MAUGIN, Melek, 69700 CHASSAGNY (FR)
(74) Mandataire: De Lamo Marin, Sandra

(57) **Abrégé**

L'invention concerne un câble électrique comprenant une couche semiconductrice réticulée obtenue à partir d'une composition polymère réticulable à base d'au moins un polymère d'oléfine non polaire, et d'au moins 15% en poids d'un polymère de butène, par rapport au poids total de la composition polymère réticulable.

## Description

L'invention concerne un câble électrique comprenant une couche semi-conductrice réticulée obtenue à partir d'une composition polymère réticulable à base d'au moins un polymère d'oléfine non polaire, et d'au moins 15% en poids d'un polymère de butène, par rapport au poids total de la composition polymère réticulable.

Elle s'applique typiquement, mais non exclusivement, aux domaines des câbles d'énergie à moyenne tension (notamment de 6 à 45-60 kV) ou à haute tension (notamment supérieur à 60 kV, et pouvant aller jusqu'à 800 kV), qu'ils soient à courant continu ou alternatif.

Elle s'applique plus particulièrement aux câbles d'énergie ayant une couche semi-conductrice facilement pelable.

Un câble peut être équipé d'une couche semi-conductrice pelable. La pelabilité d'une couche semi-conductrice permet notamment de préparer facilement des zones d'un câble dans lesquelles des joints doivent être insérés, et/ou des terminaisons de câble doivent être ajoutées afin de raccorder le câble à un dispositif tel qu'un transformateur de puissance, un appareillage de connexion, un système de barre omnibus, ou une ligne aérienne.

Les compositions pour couche semi-conductrice les plus couramment utilisées comprennent au moins un copolymère d'éthylène polaire de type copolymère d'éthylène et d'acétate de vinyle. En particulier, US 2006/182961 A1 décrit une composition réticulable pour couche semi-conductrice de câble électrique comprenant un copolymère d'éthylène et d'acétate de vinyle (EVA) et un homopolymère de propylène. Cette solution n'est toutefois pas satisfaisante pour les raisons suivantes. D'une part, lors de la réticulation de la couche semi-conductrice dans une ligne continue de vulcanisation (bien connue sous l'anglicisme « *CV line* »), le copolymère d'EVA se dégrade de par les températures élevées mises en œuvre, et conduit à des résidus tels que l'acide acétique qui s'accumulent dans le tube et le corrode. En effet, il peut exister, notamment à partir d'environ 200°C, une scission des groupements acétate de vinyle des copolymères d'EVA, ces groupements formant ainsi en présence d'humidité de l'acide acétique. En outre, après la réticulation, des sous-produits polaires provenant de la dégradation de l'EVA, dont l'acide acétique précité, peuvent rester présents dans la couche électriquement isolante voisine de la couche semi-conductrice destinée à être pelée. Ceci entraîne une augmentation de la valeur du facteur de pertes diélectriques (également connu sous le nom de « tangente delta (tanδ) »), qui peut s'avérer critique pour des câbles opérés à haute tension. Ainsi, l'utilisation dans des câbles haute ou très haute tension alternative de couches semi-conductrices de l'art antérieur destinées à être pelées reste exceptionnelle, alors qu'elle représente un grand intérêt technique et économique. De plus, les compositions pour couche semi-conductrice destinée à être pelée les plus couramment utilisées comprennent des matières polaires telles que l'EVA précité ou des caoutchoucs synthétiques de type acrylo-nitrile-butadiène (NBR). La forte polarité de ces matières, et ainsi leur fort pouvoir collant vis-à-vis de nombreuses autres matières polaires, voire certains métaux, peuvent entraîner des phénomènes de collage non désirés entre la couche semi-conductrice destinée à être pelée et des éléments voisins faisant partie de la construction du câble, comme par exemple des rubans entourant ladite couche semi-conductrice servant à bloquer une éventuelle progression de l'eau le long du câble en cas de perforation de la gaine extérieure de protection. Ce type de collage non désiré complique la préparation des extrémités du câble au moment de la pose de joints et/ou de terminaisons. Également, pendant la production du câble ayant une couche semi-conductrice de l'art antérieur destinée à être pelée, il peut être observé que les spires des conducteurs isolées peuvent se coller entre elles au moyen de la couche semi-conductrice externe, si le refroidissement en sortie du tube de vulcanisation est défaillant. Enfin, l'adhésion entre la couche semi-conductrice polaire obtenue et une couche non polaire de type polyéthylène réticulée (XLPE) n'est pas optimisée, de sorte que la couche semi-conductrice peut se détacher toute seule.

Le but de la présente invention est de pallier les inconvénients des techniques de l'art antérieur en proposant un câble électrique, notamment à moyenne ou haute tension, ledit câble comprenant au moins une couche semi-conductrice présentant une bonne pelabilité, en particulier, quelle que soit la nature polaire ou non polaire de la couche sur laquelle ladite couche semi-conductrice est déposée ; une tendance réduite au collage spontané de ladite couche semi-conductrice avec des matières d'éléments voisins et/ou au collage spontané entre des éléments voisins de ladite couche semi-conductrice ; et une stabilité thermique améliorée.

L'invention a pour premier objet un câble électrique comprenant au moins un élément électriquement conducteur allongé, une couche électriquement isolante entourant l'élément électriquement conducteur allongé, et une couche semi-conductrice entourant la couche électriquement isolante, caractérisé en ce que la couche semi-conductrice est une couche réticulée obtenue à partir d'une composition polymère réticulable comprenant au moins un polymère d'oléfine non polaire, et au moins 15% en poids environ d'un polymère de butène, par rapport au poids total de la composition polymère réticulable.

Grâce à la combinaison d'au moins un polymère d'oléfine non polaire et d'au moins 15% en poids d'un polymère de butène, par rapport au poids total de la composition polymère réticulable, la couche semi-conductrice du câble de l'invention ainsi obtenue présente une bonne pelabilité, en particulier, quelle que soit la nature polaire ou non polaire de la couche sur laquelle ladite couche semi-conductrice est déposée ; une tendance réduite au collage spontané de ladite couche semi-conductrice avec des matières d'éléments voisins et/ou au collage spontané entre des éléments voisins de ladite couche semi-conductrice ; et une stabilité thermique améliorée.

### La composition polymère réticulable

### Le polymère de butène

Dans la présente invention, le polymère de butène est un homo- ou un copolymère de butène.

La composition polymère réticulable comprend de préférence au moins 20% en poids environ, et de façon particulièrement préférée au moins 25% en poids environ du polymère de butène, par rapport au poids total de la composition polymère réticulable.

La composition polymère réticulable peut comprendre au plus 75% en poids environ, et de préférence au plus 50% en poids environ du polymère de butène, par rapport au poids total de la composition polymère réticulable.

Le copolymère de butène peut être un copolymère de butène et d'une oléfine choisie parmi l'éthylène, le propylène, et les oléfines en C₅-C₁₂, de préférence l'éthylène, le propylène, et les oléfines en C₅-C₁₀, de façon particulièrement préférée l'éthylène, le propylène, et les oléfines en C₅-C₈, et de façon plus particulièrement préférée l'éthylène.

Selon une forme de réalisation préférée, le copolymère de butène comprend des blocs de butène et des blocs d'une oléfine choisie parmi l'éthylène, le propylène, et les oléfines en C₅-C₁₂, de sorte que la proportion de blocs de butène soit majoritaire.

En d'autres termes, lorsque le copolymère de butène est un copolymère de butène et d'éthylène, il peut répondre à la formule suivante :

- (CH₂-CH₂)ₓ- (CH[CH₂-CH₃]-CH₂)y-

dans laquelle y > 1, x ≥ 1 et y > x.

L'oléfine peut être une alpha-oléfine.

Le copolymère de butène peut comprendre au moins 30% en poids environ, de préférence au moins 40% en poids environ, de façon particulièrement préférée au moins 50% en poids environ, et de façon plus particulièrement préférée au moins 60% en poids environ de butène, par rapport au poids total du copolymère de butène.

La quantité de butène dans le polymère de butène peut être facilement déterminée par des techniques bien connues de l'homme du métier, notamment par spectroscopie RMN (résonance magnétique nucléaire), et/ou spectroscopie IR (infrarouge).

Le polymère de butène conforme à l'invention peut avoir un poids moléculaire d'au moins 10000 g/mol environ, de préférence d'au moins 20000 g/mol environ, de façon particulièrement préférée d'au moins 40000 g/mol environ, et de façon plus particulièrement préférée d'au moins 50000 g/mol environ.

Le polymère de butène conforme à l'invention est de préférence sous la forme solide à température ambiante, en particulier à 18-25°C.

Le polymère de butène conforme à l'invention peut avoir un indice de fluidité allant de 0,4 à 1500 g/10 min environ, de préférence allant de 0,5 à 100 g/10 min environ, de façon particulièrement préférée allant de 1 à 50 g/10 min environ, et de façon plus particulièrement préférée allant de 3 à 10 g/10 min environ, mesuré à 190°C environ avec une charge de 2,16 kg environ selon la norme ASTM D1238-00.

Le polymère de butène conforme à l'invention peut avoir un module élastique allant de 20 à 1000 MPa environ, de préférence allant de 50 à 600 MPa environ, de façon particulièrement préférée allant de 100 à 600 MPa environ ; et de façon plus particulièrement préférée allant de 200 à 600 MPa environ.

Le polymère de butène conforme à l'invention est de préférence obtenu par polymérisation de type Ziegler-Natta.

Selon l'invention, on entend par polymérisation de type Ziegler-Natta, une polymérisation coordinative obtenue en présence d'un catalyseur de Ziegler-Natta, pouvant notamment être choisi parmi les halogénures de métaux de transition, en particulier le titane, le chrome, le vanadium, ou le zirconium en mélange avec des dérivés organiques de métaux autres que des métaux de transition, en particulier un alkyle d'aluminium.

Typiquement, le polymère de butène est obtenu à partir de la polymérisation de butène ou de la copolymérisation de butène avec un monomère différent du butène, en présence d'un catalyseur Ziegler-Natta, et de préférence par polymérisation ou copolymérisation selon un procédé basse pression.

Selon une forme de réalisation particulièrement préférée de l'invention, le polymère de butène est un homo- ou un copolymère de butène-1. En d'autres termes, le polymère de butène est différent d'un polyisobutène.

La couche semi-conductrice du câble de l'invention peut avantageusement être en mesure de fonctionner à des températures d'au moins de 100°C, en limitant de façon significative, voire en évitant, la déformation de la structure ou géométrie du câble, et en garantissant ainsi son bon fonctionnement en configuration opérationnelle.

Selon une première variante, le polymère de butène est un homopolymère de butène-1.

Selon une deuxième variante, le polymère de butène est un copolymère de butène-1.

Selon une forme de réalisation préférée, le copolymère de butène-1 est un copolymère de butène-1 et d'éthylène.

Le polymère de butène conforme à l'invention est de préférence différent d'un polymère de butylène.

### La charge conductrice

La composition polymère réticulable comprend en particulier au moins une charge conductrice, notamment en quantité suffisante pour rendre la couche semi-conductrice.

La composition polymère réticulable peut comprendre au moins 6% en poids environ de charge conductrice, de préférence au moins 10% en poids environ de charge conductrice, préférentiellement au moins 15% en poids environ de charge conductrice, et encore plus préférentiellement au moins 25% en poids environ de charge conductrice, par rapport au poids total de la composition polymère réticulable.

La composition polymère réticulable peut comprendre au plus 45% en poids environ de charge conductrice, et de préférence au plus 40% en poids environ de charge conductrice, par rapport au poids total de la composition polymère réticulable.

La charge conductrice est de préférence une charge électriquement conductrice.

La charge conductrice peut être choisie avantageusement parmi les noirs de carbone, les graphites, les nanotubes de carbone, et un de leurs mélanges.

### Le polymère d'oléfine non polaire

Le polymère d'oléfine non polaire est choisi parmi les homo- et les copolymères d'oléfine choisie parmi l'éthylène et les oléfines en C₃-C₁₂, de préférence l'éthylène et les oléfines en C₃-C₁₀, et de façon particulièrement préférée l'éthylène et les oléfines en C₃-C₈.

L'oléfine est de préférence une alpha-oléfine.

Selon une forme de réalisation de l'invention, le polymère d'oléfine non polaire est choisi parmi les homo- et les copolymères d'éthylène.

Selon une forme de réalisation préférée de l'invention, le polymère d'oléfine non polaire est choisi parmi un polyéthylène linéaire très basse densité, un polyéthylène linéaire basse densité, un polyéthylène basse densité, un copolymère d'éthylène et d'octène, et un de leurs mélanges ; et de façon plus particulièrement préférée choisi parmi un polyéthylène linéaire très basse densité, un polyéthylène linéaire basse densité, un polyéthylène basse densité, et un de leurs mélanges.

Dans la présente invention, l'expression « basse densité » signifie une densité allant de 0,91 à 0,925 environ, ladite densité étant mesurée selon la norme ISO 1183A (à une température de 23°C).

Dans la présente invention, l'expression « très basse densité » signifie une densité allant de 0,850 à 0,909 environ, ladite densité étant mesurée selon la norme ISO 1183A (à une température de 23°C).

Selon un mode de réalisation de l'invention, la composition polymère réticulable comprend au moins 15% en poids environ, et de préférence au moins 30% en poids environ, du polymère d'oléfine non polaire, par rapport au poids total de la composition polymère réticulable.

Selon un mode de réalisation de l'invention, la composition polymère réticulable comprend au plus 75% en poids environ, et de préférence au plus 50% en poids environ, du polymère d'oléfine non polaire, par rapport au poids total de la composition polymère réticulable.

La composition polymère réticulable du câble de l'invention peut comprendre au moins 50% en poids environ, et de préférence au moins 65% en poids environ de polymère(s), par rapport au poids total de la composition polymère réticulable.

Selon une forme de réalisation préférée de l'invention, la composition polymère réticulable comprend au moins 70% en poids environ, et plus préférentiellement au moins 80% en poids de polymère(s) non polaire(s), par rapport au poids total de polymère(s) dans la composition polymère réticulable. Dans ce cas, le nombre de % en poids de polymère(s) non polaire(s) est exprimé par rapport au poids total de polymère(s) dans la composition polymère réticulable.

Dans la présente invention, l'expression « non polaire » signifie que le polymère de ce type ne comporte pas de fonctions polaires, telles que par exemple des groupements acétate, acrylate, hydroxyle, nitrile, carboxyle, carbonyle, éther, ester, ou tous autres groupements à caractère polaire bien connus dans l'art antérieur tels que notamment les groupements silane. Par exemple, un polymère non polaire est différent d'un polymère choisi parmi les copolymères d'éthylène du type copolymère d'éthylène et d'acétate de vinyle (EVA), copolymère d'éthylène et de butyle acrylate (EBA), copolymère d'éthylène et d'éthyle acrylate (EEA), copolymère d'éthylène et d'acrylate de méthyle (EMA), ou copolymère d'éthylène et d'acide acrylique (EAA) ou copolymère d'éthylène vinyl silane.

La composition polymère réticulable du câble de l'invention peut comprendre au plus 30% en poids environ, de préférence au plus 20% en poids, et de façon particulièrement préférée au plus 10% en poids de polymère(s) polaire(s), par rapport au poids total de polymère(s) dans la composition polymère réticulable. Dans ce cas, le nombre de % en poids de polymère(s) polaire(s) est exprimé par rapport au poids total de polymère(s) dans la composition polymère réticulable.

Dans la présente invention, l'expression « polaire » signifie un polymère comprenant des fonctions polaires, en particulier des groupements acétate, acrylate, hydroxyle, nitrile, carboxyle, carbonyle, éther, ester, ou tous autres groupements à caractère polaire bien connus dans l'art antérieur.

Plus particulièrement, la composition polymère réticulable peut comprendre uniquement le polymère de butène et un ou plusieurs polymères d'oléfines non polaires tels que définis dans l'invention.

En outre, la couche semi-conductrice présente l'avantage d'être une couche facilement pelable, en particulier à température ambiante (18-25°C), et de préférence ayant une pelabilité durable dans le temps.

Dans la présente invention, la couche semi-conductrice de l'invention est une couche dite « pelable », afin d'avoir notamment facilement accès à la couche sous-jacente ou aux couches sous-jacentes, et/ou à l'élément électriquement conducteur allongé. À ce titre, la couche semi-conductrice du câble de la présente invention peut avoir une force de pelabilité comprise entre 4 et 45 Newton (N) (bornes incluses), et de préférence de 4 à 15 Newtons, selon la méthode de mesure définie dans la norme IEC 60502-2 (février 2014).

La couche semi-conductrice de l'invention présente par conséquent une adhérence suffisante à la couche sous-jacente ou aux couches sous-jacentes afin d'éviter qu'elle ne se détache toute seule ; tout en ayant une pelabilité suffisante afin de faciliter le retrait, notamment manuel, d'au moins une partie de cette couche semi-conductrice.

La couche semi-conductrice de l'invention présente une très bonne stabilité thermique, notamment sous une atmosphère d'azote.

Plus particulièrement, la couche semi-conductrice du câble de l'invention présente une perte de poids inférieure à 15% environ, de préférence inférieure ou égale à 10% environ, et de façon plus particulièrement préférée inférieure ou égale à 5% environ, mesurée par analyse thermogravimétrique (TGA) sous atmosphère d'azote à 350°C, et plus particulièrement en chauffant avec une vitesse de 10°C par minute de 20 à 350°C, puis en maintenant une température de 350°C pendant 100 minutes. La perte de poids de la couche semi-conductrice est généralement proportionnelle à la dégradabilité de la couche semi-conductrice.

La couche semi-conductrice de l'invention présente également une surface bien lisse (i.e. sans rugosités), de bonnes propriétés mécaniques, notamment après vieillissement en température, et elle est facilement manipulable.

### Les additifs

La couche semi-conductrice est une couche réticulée. Ainsi, la couche semi-conductrice réticulée permet d'avoir des propriétés mécaniques améliorées, et de ce fait, la température maximale de fonctionnement du câble s'en trouvera augmentée.

Dans la présente invention, l'expression « couche réticulée » signifie une couche dont le taux de gel selon la norme ASTM D2765-01 (extraction au xylène) est d'au moins 40% environ, de préférence d'au moins 50% environ, de préférence d'au moins 60% environ, de façon particulièrement préférée d'au moins 70% environ, et de façon plus particulièrement préférée d'au moins 80% environ.

La composition polymère réticulable peut comprendre en outre au moins un agent de réticulation.

L'agent de réticulation peut être choisi parmi les peroxydes organiques, les silanes et/ou tout autre agent de réticulation approprié pour la réticulation de polyoléfines.

À titre d'exemples de peroxydes organiques, on peut citer les peroxydes du type tert-Butylcumyl peroxyde ou du type dicumyl peroxyde, le 2,5-diméthyl-2,5-di(tert-butylperoxy)hexyne-3, ou le 1,3 et 1,4-Bis (tert-butylperoxyisopropyl)benzène.

La composition polymère réticulable peut typiquement comprendre de 0,2 à 2,0% en poids environ, et de préférence de 0,5 à 1,0% en poids environ d'agent de réticulation, par rapport au poids total de la composition polymère réticulable.

La composition polymère réticulable peut comprendre en outre au moins un antioxydant.

Les antioxydants sont choisis de préférence parmi les phénols encombrés, les antioxydants à base de soufre, les antioxydants à base de phosphore, les antioxydants de type amine, et un de leurs mélanges.

À titre d'exemples de phénols encombrés, on peut citer le Pentaérythritol tétrakis(3-(3,5-di-*tert*-butyl-4-hydroxyphényl)propionate) (Irganox® 1010), l'octadécyl 3-(3,5-di-*tert*-butyl-4-hydroxyphényl)propionate (Irganox® 1076), le 1,3,5-triméthyl-2,4,6-tris(3,5-di-*tert*-butyl-4-hydroxybenzyl)benzène (Irganox® 1330), le 4,6-bis (octylthiométhyl)-o-crésol (Irgastab® KV10 ou Irganox® 1520), le 2,2'-thiobis(6-*tert*-butyl-4-méthylphénol) (Irganox® 1081), le 2,2'- thiodiéthylène bis[3-(3,5-di-*tert-*butyl-4-hydroxyphényl) propionate] (Irganox® 1035), le 2,2'-méthylènebis(6-*tert*-butyl-4-méthylphénol), le 1,2-bis(3,5-di-tert-butyl-4-hydroxyhydrocinnamoyl) hydrazine (Irganox® MD 1024), le tris (3,5-di-*tert-*butyl-4-hydroxybenzyl) isocyanurate (Irganox® 3114), ou le 2,2'-oxamido-bis(éthyl-3(3,5-di-*tert*-butyl-4-hydroxyphényle)propionate).

À titre d'exemples d'antioxydants à base de soufre, on peut citer les thioéthers tels que le didodécyl-3,3'-thiodipropionate (Irganox® PS800), le distéaryl thiodipropionate ou dioctadecyl-3,3'-thiodipropionate (Irganox® PS802), le bis[2-méthyle-4-{3-n-alkyle (C₁₂ ou C₁₄) thiopropionyloxy}-5-*tert-*butylphényl]sulfide, le thiobis-[2-*tert*-butyl-5-méthyle-4,1-phénylène] bis [3-(dodécylthio)propionate], ou le 4,6-bis(octylthiométhyle)-o-crésol (Irganox® 1520 ou Irgastab® KV10).

À titre d'exemples d'antioxydants à base de phosphore, on peut citer les phosphites ou les phosphonates, tels que le tris(2,4-di-*tert*-butyl-phényle)phosphite (Irgafos® 168) ou le bis(2,4-di-*tert-*butylphényl)pentaérythritol diphosphite (Ultranox® 626).

À titre d'exemples d'antioxydants de type amine, on peut citer les phénylène diamines (e.g. paraphénylènes diamines tels que 1PPD ou 6PPD), les diphénylamine styrène, les diphénylamines, le 4-(1-méthyl-1-phényléthyl)-N-[4-(1-méthyl-1-phényléthyl)phényl]aniline (Naugard 445), les mercapto benzimidazoles, ou le 2,2,4-triméthyl-1,2 dihydroquinoline polymérisé (TMQ).

La composition polymère réticulable peut typiquement comprendre de 0,2 à 2% en poids environ, et de préférence de 0,5 à 1,5% en poids environ d'antioxydant, par rapport au poids total de la composition polymère réticulable.

La composition polymère réticulable peut comprendre en outre un ou plusieurs additifs.

Les additifs sont bien connus de l'homme du métier et peuvent être choisis parmi des agents favorisant la mise en œuvre tels que des lubrifiants, des agents compatibilisants, des agents de couplage, des composés réduisant les arborescences d'eau, des pigments, des charges non-conductrices, des charges minérales sans halogène destinées à améliorer le comportement au feu de la couche semi-conductrice, et un de leurs mélanges.

La composition polymère réticulable peut typiquement comprendre de 0,01 à 5% en poids environ, et de préférence de 0,1 à 2% en poids environ d'additif(s), par rapport au poids total de la composition polymère réticulable.

Dans la présente invention, on entend par « couche semi-conductrice » une couche dont la conductivité électrique peut être strictement supérieure à 1.10⁻⁸ S/m (Siemens par mètre), de préférence d'au moins 1.10⁻³ S/m, et de préférence peut être inférieure à 1.10³ S/m, mesurée à 25°C en courant continu.

### La couche électriquement isolante

Dans la présente invention, on entend par « couche électriquement isolante » une couche dont la conductivité électrique peut être d'au plus 1.10⁻⁸ S/m (siemens par mètre), de préférence d'au plus 1.10⁻⁹ S/m, et de façon particulièrement préférée d'au plus 1.10⁻¹⁰ S/m (siemens par mètre), mesurée à 25°C en courant continu.

La couche semi-conductrice a plus particulièrement une conductivité électrique supérieure à celle de la couche électriquement isolante. Plus particulièrement, la conductivité électrique de la couche électriquement isolante peut être au moins 10 fois inférieure à la conductivité électrique de la couche semi-conductrice, de préférence au moins 100 fois inférieure à la conductivité électrique de la couche semi-conductrice, et de façon particulièrement préférée au moins 1000 fois inférieure à la conductivité électrique de la couche semi-conductrice.

La couche électriquement isolante peut comprendre au moins un polymère d'oléfine, pouvant être polaire ou non polaire.

Plus particulièrement, la couche électriquement isolante comprend au moins un polymère choisi parmi les polymères d'éthylène, les polymères de propylène, et un de leurs mélanges, et de préférence parmi les polymères d'éthylène.

À titre d'exemples de polymères d'éthylène, on peut citer un polyéthylène linéaire basse densité (LLDPE), un polyéthylène basse densité (LDPE), un polyéthylène très basse densité (VLDPE), un polyéthylène moyenne densité (MDPE), un polyéthylène haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les copolymères d'éthylène et de propylène (EPR), les copolymères d'éthylène/éthyle acrylate (EEA), ou les terpolymères d'éthylène et de propylène (EPT) tels que par exemple les terpolymères d'éthylène propylène diène monomère (EPDM), ou un de leurs mélanges.

Dans la présente invention, l'expression « moyenne densité » signifie une densité allant de 0,926 à 0,940 environ, ladite densité étant mesurée selon la norme ISO 1183A (à une température de 23°C).

Dans la présente invention, l'expression « haute densité » signifie une densité allant de 0,941 à 0,965, ladite densité étant mesurée selon la norme ISO 1183A (à une température de 23°C).

Selon une forme de réalisation particulièrement préférée de l'invention, la couche électriquement isolante est une couche réticulée.

En particulier, la couche électriquement isolante comprend au moins un polymère d'éthylène réticulé (XLPE).

### Le câble

L'élément électriquement conducteur allongé de l'invention peut être du type monobrins ou multibrins. De préférence, ledit élément électriquement conducteur allongé est en cuivre, en alliage de cuivre, en aluminium, ou en alliage d'aluminium.

Le câble électrique de l'invention peut en outre comprendre une autre couche semi-conductrice entourant ledit élément électriquement conducteur allongé, et étant entourée par la couche électriquement isolante.

Ainsi, dans ce mode de réalisation, le câble de l'invention peut comprendre au moins un élément électriquement conducteur allongé, notamment positionné au centre du câble :
- entouré par une première couche semi-conductrice, ou en d'autres termes entouré par ladite autre couche semi-conductrice de l'invention,
- la première couche semi-conductrice étant entourée par une couche électriquement isolante, ou en d'autres termes entourée par ladite couche électriquement isolante de l'invention, et
- la couche électriquement isolante étant entourée par une deuxième couche semi-conductrice, la deuxième couche semi-conductrice de ce mode de réalisation étant la couche semi-conductrice telle que décrite dans la présente invention.

Ainsi, la première couche semi-conductrice, la couche électriquement isolante et la deuxième couche semi-conductrice constituent une isolation tricouche. Plus particulièrement, la première couche semi-conductrice est directement en contact physique avec la couche électriquement isolante, et la deuxième couche semi-conductrice est directement en contact physique avec la couche électriquement isolante.

La couche semi-conductrice du câble de l'invention est de préférence une couche extrudée, notamment par des techniques bien connues de l'homme du métier.

Le câble électrique de l'invention peut comprendre en outre un écran métallique entourant la couche semi-conductrice du câble de l'invention, la couche semi-conductrice du câble de l'invention étant celle qui entoure la couche électriquement isolante.

Cet écran métallique peut être un écran dit « filaire », composé d'un ensemble de conducteurs en cuivre ou aluminium arrangé autour et le long du de la couche semi-conductrice, un écran dit « rubané » composé d'un ou de plusieurs rubans métalliques conducteurs posé(s) en hélice autour de la couche semi-conductrice, ou d'un écran dit « étanche » de type tube métallique entourant la couche semi-conductrice. Ce dernier type d'écran permet notamment de faire barrière à l'humidité ayant tendance à pénétrer le câble électrique en direction radiale.

Tous les types d'écran métalliques peuvent jouer le rôle de mise à la terre du câble électrique et peuvent ainsi transporter des courants de défaut, par exemple en cas de court-circuit dans le réseau concerné.

En outre, le câble électrique de l'invention peut comprendre une gaine extérieure de protection entourant la deuxième couche semi-conductrice, ou bien entourant plus particulièrement ledit écran métallique lorsqu'il existe. Cette gaine extérieure de protection peut être réalisée classiquement à partir de matériaux thermoplastiques appropriées tels que des HDPE, des MDPE ou des LLDPE ; ou encore des matériaux retardant la propagation de la flamme ou résistant à la propagation de la flamme. Notamment, si ces derniers matériaux ne contiennent pas d'halogène, on parle de gainage de type HFFR (pour l'anglicisme « *Halogen Free Flame Retardant* »).

D'autres couches, telles que des couches gonflantes en présence d'humidité, peuvent être ajoutées entre la deuxième couche semi-conductrice et l'écran métallique lorsqu'il existe, et/ou entre l'écran métallique et la gaine extérieure lorsqu'ils existent, ces couches permettant d'assurer l'étanchéité longitudinale du câble électrique à l'eau. Le conducteur électrique du câble de l'invention peut également comprendre des matières gonflantes en présence d'humidité pour obtenir une « âme étanche ».

Afin de garantir un câble électrique dit « HFFR » pour l'anglicisme « *Halogen Free Flame Retardant* », le câble de l'invention ne comprend préférentiellement pas de composés halogénés. Ces composés halogénés peuvent être de toutes natures, tels que par exemple des polymères fluorés ou des polymères chlorés comme le polychlorure de vinyle (PVC), des plastifiants halogénés, des charges minérales halogénées, ...etc.

La couche semi-conductrice réticulée du câble de l'invention peut comprendre au moins un polymère d'oléfine non polaire, et au moins 15% en poids environ d'un polymère de butène, par rapport au poids total de la couche semi-conductrice.

La couche semi-conductrice réticulée peut comprendre en outre une charge conductrice.

La couche semi-conductrice réticulée peut comprendre en outre un antioxydant, et éventuellement un ou plusieurs additifs.

Le polymère d'oléfine non polaire, le polymère de butène, la charge conductrice, l'antioxydant, et les additifs sont tels que définis dans l'invention.

Les proportions des différents ingrédients dans la couche semi-conductrice réticulée peuvent être identiques à celles telles que décrites dans l'invention pour ces mêmes ingrédients dans la composition polymère réticulable.

Le câble électrique peut être préparé par extrusion de la composition polymère réticulable autour dudit élément électriquement conducteur allongé, et plus particulièrement autour de la couche électriquement isolante, pour obtenir une couche semi-conductrice extrudée, et par réticulation de la couche semi-conductrice extrudée.

L'extrusion peut être réalisée par des techniques bien connues de l'homme du métier, à l'aide d'une extrudeuse.

Lors de l'extrusion, la composition polymère réticulable en sortie d'extrudeuse est dite « non réticulée », la température ainsi que le temps de mise en œuvre au sein de l'extrudeuse étant optimisés en conséquent.

En sortie d'extrudeuse, on obtient donc une couche semi-conductrice extrudée autour dudit élément électriquement conducteur, et plus particulièrement autour de la couche électriquement isolante.

Préalablement ou concomitamment à l'extrusion de la composition polymère réticulable pour former la couche semi-conductrice, la couche électriquement isolante du câble électrique de l'invention peut être obtenue par extrusion. Les couches électriquement isolante et semi-conductrice peuvent alors être obtenues par extrusion successive ou par co-extrusion.

Préalablement à l'extrusion de ces couches autour dudit élément électriquement conducteur allongé, l'ensemble des constituants polymères nécessaires à la formation de ces couches peut être dosé et mélangé dans un mélangeur en continu de type co-malaxeur BUSS, extrudeuse bi-vis ou un autre type de mélangeur approprié pour des mélanges polymères, notamment chargés. Le mélange résultant peut être ensuite extrudé sous forme de joncs, puis refroidi et séché pour être mis sous forme de granulés, ou alors le mélange peut être mis directement sous forme de granulés, par des techniques bien connues de l'homme du métier. Ces granulés peuvent être ensuite imprégnés d'un ou plusieurs additifs tels que définis dans l'invention ainsi que de l'agent de réticulation, puis séchés, et introduits au sein d'une extrudeuse mono-vis, afin d'extruder la couche en question.

Les différentes compositions peuvent être extrudées les unes à la suite des autres pour entourer de façon successive l'élément électriquement conducteur allongé, et ainsi former les différentes couches du câble électrique de l'invention.

Elles peuvent alternativement être extrudées concomitamment par co-extrusion à l'aide d'une unique tête d'extrudeuse, la co-extrusion étant un procédé bien connu de l'homme du métier.

Que ce soit dans l'étape de formation des granulés ou dans l'étape d'extrusion sur câble, les conditions opératoires sont bien connues de l'homme du métier. Notamment, la température au sein du dispositif de mélange ou d'extrusion peut être supérieure à la température de fusion du polymère majoritaire ou du polymère ayant la température de fusion la plus élevée, parmi les polymères utilisés dans la composition à mettre en œuvre.

Typiquement, une fois la composition polymère réticulable de l'invention mise en œuvre autour de l'élément électriquement conducteur allongé, et plus particulièrement autour de la couche électriquement isolante, par extrusion, la réticulation peut s'effectuer par voie thermique, par exemple à l'aide d'une ligne continue de vulcanisation (« *CV line* »)*,* d'un tube vapeur, d'un bain de sel fondu, d'un four ou d'une chambre thermique, ces techniques étant bien connues de l'homme du métier.

La réticulation dans un tube vapeur ou un tube azote de vulcanisation, à une température pouvant être comprise entre 250 et 400°C environ, est préférée.

La composition polymère réticulable peut être réticulée par des techniques bien connues de l'homme du métier, telle que la réticulation par voie peroxyde, la réticulation silane, ou la réticulation par irradiation notamment par faisceau d'électron (rayonnement béta).

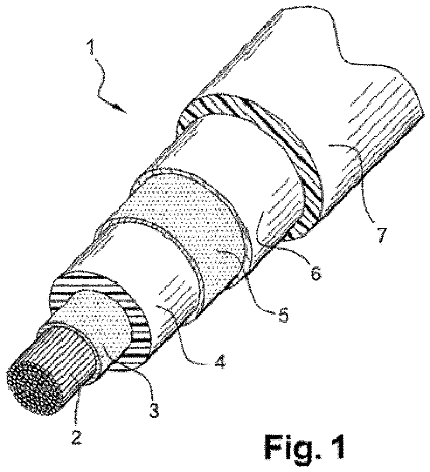

D'autres caractéristiques et avantages de la présente invention apparaîtront à la lumière de la description d'un exemple non limitatif d'un câble électrique selon l'invention fait en référence à la figure 1 représentant une vue schématique en perspective et en coupe d'un câble électrique selon un mode de réalisation préféré conforme à l'invention.

Pour des raisons de clarté, seuls les éléments essentiels pour la compréhension de l'invention ont été représentés de manière schématique, et ceci sans respect de l'échelle.

Le câble est un câble d'énergie 1 à moyenne ou haute tension, illustré dans la figure 1, et il comprend un élément électriquement conducteur 2 central allongé, notamment en cuivre ou en aluminium, et, successivement et coaxialement comprend autour de cet élément 2, une première couche semi-conductrice 3 dite « couche semi-conductrice interne », une couche électriquement isolante 4, une deuxième couche semi-conductrice 5 dite « couche semi-conductrice externe », un écran métallique 6 du type tube cylindrique, et une gaine extérieure de protection 7.

La couche semi-conductrice externe 5 de la figure 1 est une couche semi-conductrice selon l'invention.

Dans le câble de la figure 1, les couches 3, 4 et 5 sont typiquement des couches polymériques extrudées.

La présence de l'écran métallique 6 et de la gaine extérieure de protection 7 est préférentielle, mais non essentielle, cette structure de câble étant en tant que telle bien connue de l'homme du métier.

### EXEMPLE

### 1. Préparation de couches semi-conductrices

Afin de montrer les propriétés de l'invention, une couche semi-conductrice a été réalisée à partir d'une composition polymère réticulable **I1** conforme à l'invention, i.e. comprenant au moins un polymère d'oléfine non polaire, et au moins 15% en poids d'un polymère de butène et a été comparée à une couche semi-conductrice réalisée à partir d'une composition polymère réticulable **C1** comparative de l'art antérieur ne comprenant pas de polymère de butène.

Le tableau 1 ci-dessous rassemble les compositions polymères réticulables **I1** et **C1** dont les quantités des composés sont exprimées en pourcentages en poids, par rapport au poids total de la composition.

**TABLEAU 1**

| **Composition** | **C1 (*)** | **I1** |
|---|---|---|
| Polymère d'oléfine non polaire | 0,0 | 42,6 |
| Polymère de butène | 0,0 | 25,5 |
| EVA | 36,0 | 0,0 |
| NBR | 17,9 | 0,0 |
| Cire de polyéthylène | 3,8 | 0,0 |
| Craie | 6,0 | 0,0 |
| Stéaryl érucamide | 0,9 | 0,0 |
| Antioxydant | 1,0 | 1,5 |
| Charge conductrice | 33,8 | 29,8 |
| Peroxyde organique | 0,6 | 0,6 |
| Total ingrédients composition | 100 | 100 |

| | | |
|---|---|---|
| (*) Composition comparative ne faisant pas partie de l'invention | | |

L'origine des composés du tableau 1 est la suivante :
- polymère d'oléfine non polaire : polyéthylène linéaire basse densité commercialisé par la société Versalis sous la référence Clearflex FGH B0 ;
- polymère de butène: homopolymère de butène commercialisé par la société Lyondellbasell sous la référence PB 0300M ;
- EVA : copolymère d'éthylène et d'acétate de vinyle commercialisé par la société Exxon Mobil Chemicals sous la référence Escorene Ultra UL00728 ;
- NBR : caoutchouc nitrile commercialisé par la société Arlanxeo sous la référence Baymod N 34.82 ;
- cire de polyéthylène commercialisée par la société Clariant sous la référence Licowax PE 520 ;
- craie commercialisée par la société Omya sous la référence Omcarb EXH-1 SP ;
- stéaryl érucamide commercialisé par la société PMC sous la référence Biogenix Kemamide E-180 ;
- antioxydant : 2,2,4-triméthyl-1,2 dihydroquinoline polymérisé (TMQ) commercialisé par la société Lanxess sous la référence Vulkanox HS/LG « Low Salt » ;
- charge conductrice : noir de carbone commercialisé par la société Orion sous la référence Printex MV (composition **I1**) ou par la société Birla sous la référence Conductex 7095 Ultra (composition **C1**) ; et
- peroxyde organique : tert-butyl cumyl peroxyde commercialisé par la société NOURYON sous la référence Trigonox T.

À l'exception du peroxyde organique liquide, l'ensemble des constituants des différentes compositions du tableau 1 peut être mélangé dans un mélangeur continu de type co-malaxeur BUSS, extrudeuse bi-vis ou un autre type de mélangeur approprié pour des mélanges caoutchouc ou des mélanges thermoplastiques chargés.

Classiquement, dans le mélangeur continu, les matières polymères sont mises en fusion, les autres constituants du mélange sont introduits et dispersés dans la matrice polymérique fondue, et le mélange homogénéisé.

Le mélange est ensuite extrudé sous forme de joncs. Les joncs sont ensuite refroidis et séchés pour être mis sous forme de granulés. Ces granulés sont alors imprégnés du peroxyde organique liquide.

Le procédé d'imprégnation des granulés permet notamment d'ajouter le peroxyde postérieurement à la formation des granulés, et ainsi d'éviter que le peroxyde commence à réticuler la matrice polymérique fondue et forme un gel de polymère (phénomène dénommé grillage ou selon l'anglicisme « scorch ». En particulier, il est préférable que le peroxyde soit introduit dans une phase de procédé où les températures ne sont pas trop élevées.

Ces granulés imprégnés sont disposés dans des moules appropriés pour pouvoir former par compression et par traitement thermique des plaques réticulées.

Pour former ces plaques circulaires réticulées, on utilise une presse automatique chauffante DK 60, selon les conditions rassemblées dans le tableau 2 ci-dessous, les étapes 1 à 4 étant mises en œuvre successivement.

Typiquement, un cycle de moulage comprend les étapes suivantes :
- les granulés sont disposés dans le moule muni de films anti-adhérents en téflon,
- le moule est fermé de son couvercle, et est placé sur la presse préchauffée à 60°C pour une mise en température,
- quand le moule est à 60°C, la presse est mise sous pression,
- le moule est chauffé à 130°C, afin de permettre la réticulation,
- le moule est refroidi et les plaques réticulées sont démoulées.

**TABLEAU 2**

| Etapes | Etape 1 | Etape 2 | Etape 3 | Etape 4 |
|---|---|---|---|---|
| Température de la presse (°C) | 130 | 130 | 130 | 50 |
| Pression de la presse (bar) | 6 | 12 | 12 | 12 |
| Durée (minutes) | 4 | 1 | 0,5 | 4 |

Une fois l'étape 4 réalisée, la plaque circulaire est démoulée puis refroidie à température ambiante. Elle a une épaisseur comprise entre 0,5 et 1,5 mm.

### 2. Préparation de couches électriquement isolantes

Deux compositions électriquement isolantes dites de « référence » **I2** et **I3** ont été préparées selon un procédé tel que tel décrit ci-avant avec un mélangeur continu, puis des granulés sont formés par des techniques bien connues de l'homme du métier.

La composition **I2** comprend 98,23% en poids d'un polyéthylène basse densité commercialisé par la société INEOS sous la référence BPD 2000, 0,22% en poids de 4,6-bis (octylthiométhyl)-o-crésol commercialisé par la société BASF sous la référence Irgastab KV 10 en tant qu'antioxydant, et 1,55% en poids de tert-butyl cumyl peroxyde commercialisé par la société NOURYON sous la référence Trigonox T en tant que peroxyde organique, par rapport au poids total de la composition.

La composition **I3** est une composition commercialisée par la société Borealis sous la référence Borlink LH4201R comprenant un polyéthylène basse densité et un copolymère d'éthylène et d'un co-monomère polaire.

Ces granulés sont ensuite mis sous presse pour former des plaques circulaires, à l'aide d'une presse chauffante DK 60, selon les conditions rassemblées dans le tableau 3 ci-dessous, les étapes 1 à 4 étant mises en œuvre successivement :

**TABLEAU 3**

| Etapes | Etape 1 | Etape 2 | Etape 3 | Etape 4 |
|---|---|---|---|---|
| Température de la presse (°C) | 130 | 130 | 130 | 50 |
| Pression de la presse (bar) | 3 | 12 | 12 | 12 |
| Durée (minutes) | 4 | 1 | 0,5 | 4 |

Une fois l'étape 4 réalisée, la plaque circulaire est démoulée puis refroidie à température ambiante. Elle a une épaisseur comprise entre 0,5 et 1,5 mm.

### 3. Préparation de bi-couches

Une première plaque circulaire de couche électriquement isolante et une deuxième plaque circulaire de couche semi-conductrice obtenues ci-avant sont positionnées l'une sur l'autre pour former un bi-couche, et positionnées dans une presse chauffante DK 60, selon les conditions rassemblées dans le tableau 4 ci-dessous, les étapes 1 à 3 étant mises en œuvre successivement :

**TABLEAU 4**

| Etapes | Etape 1 | Etape 2 | Etape 3 |
|---|---|---|---|
| Température de la presse (°C) | 190 | 190 | 50 |
| Pression de la presse (bar) | 2 | 3 | 3 |
| Durée (minutes) | 5 | 2 | 4 |

Lors de la préparation du bi-couche, avant sa mise sous presse, un film de polyester est positionné entre une partie des deux couches afin de pouvoir ensuite réaliser le test de pelabilité en séparant facilement la partie des deux couches séparées par ledit film.

Une fois l'étape 3 réalisée, le bi-couche est démoulé puis refroidi à température ambiante. Il a une épaisseur comprise entre 1 et 3 mm.

Le test de pelabilité a été réalisé à l'aide d'une machine de traction Alpha Technologies T2000, comprenant les étapes suivantes :
- des rectangles de 200 mm sur 10 mm sont découpés dans le bi-couche circulaire,
- environ 25 mm de longueur de la couche semi-conductrice des 200 mm du bi-couche sont séparés de la couche électriquement isolante, grâce au film polyester positionné préalablement dans une partie du bi-couche pour obtenir la séparation du bi-couche dans cette partie,
- l'extrémité de la partie de la couche semi-conductrice séparée est fixée à un moyen de préhension non mobile de la machine de traction, tandis que l'extrémité de la partie de la couche électriquement isolante séparée est fixée à un moyen de préhension mobile de la machine de traction, et
- la force nécessaire pour la séparation de la couche semi-conductrice à partir de la couche électriquement isolante est mesurée sur une distance de séparation d'au moins 100 mm avec un angle de 180° et une vitesse de traction de 250 +/- 50 mm/min.

Cinq échantillons sont testés par chaque bi-couche formé.

Les résultats de pelabilité (en Newton) sont rassemblés dans le tableau 5 ci-après.

**TABLEAU 5**

| | **Bi-couche c1 / i2(*)** | **Bi-couche c1 / i3(*)** | **Bi-couche i1 / i2** | **Bi-couche i1 / i3** |
|---|---|---|---|---|
| **Pelabilité (N)** | 5,79 | 19,13 | 7,87 | 4,27 |

| | | | | |
|---|---|---|---|---|
| (*) Bi-couches comparatives ne faisant pas partie de l'invention | | | | |

L'ensemble de ces résultats montre que la couche semi-conductrice du câble de l'invention présente une très bonne pelabilité, quelle que soit la nature polaire ou non polaire de la couche électriquement isolante sous-jacente, contrairement à celle de l'art antérieur.

## Revendications

1. Câble électrique (1) comprenant au moins un élément électriquement conducteur allongé (2), une couche électriquement isolante (4) entourant l'élément électriquement conducteur allongé (2), et une couche semi-conductrice (5) entourant la couche électriquement isolante (4), **caractérisé en ce que** la couche semi-conductrice (5) est une couche réticulée obtenue à partir d'une composition polymère réticulable comprenant au moins un polymère d'oléfine non polaire, et au moins 15% en poids d'un polymère de butène, par rapport au poids total de la composition polymère réticulable.

2. Câble électrique (1) selon la revendication 1, **caractérisé en ce que** le polymère de butène est un copolymère de butène-1.

3. Câble électrique (1) selon la revendication 1 ou 2, **caractérisé en ce que** le polymère de butène est un copolymère de butène-1 et d'une oléfine choisie parmi l'éthylène, le propylène, et les oléfines en C₅-C₁₂.

4. Câble électrique (1) selon la revendication 1, **caractérisé en ce que** le polymère de butène est un homopolymère de butène-1.

5. Câble électrique (1) selon l'une quelconque des revendications précédentes, **caractérisé en ce que** le polymère de butène a un poids moléculaire d'au moins 10000 g/mol.

6. Câble électrique (1) selon l'une quelconque des revendications précédentes, **caractérisé en ce que** la composition polymère réticulable comprend au moins 6% en poids d'une charge conductrice, par rapport au poids total de la composition polymère réticulable.

7. Câble électrique (1) selon l'une quelconque des revendications précédentes, **caractérisé en ce que** le polymère d'oléfine non polaire est choisi parmi les homo- et les copolymères d'éthylène.

8. Câble électrique (1) selon l'une quelconque des revendications précédentes, **caractérisé en ce que** le polymère d'oléfine non polaire est choisi parmi un polyéthylène linéaire très basse densité, un polyéthylène linéaire basse densité, un polyéthylène basse densité, un copolymère d'éthylène et d'octène, et un de leurs mélanges.

9. Câble électrique (1) selon l'une quelconque des revendications précédentes, **caractérisé en ce que** la composition polymère réticulable comprend au moins 20% en poids du polymère de butène, par rapport au poids total de la composition polymère réticulable.

10. Câble électrique (1) selon l'une quelconque des revendications précédentes, **caractérisé en ce que** la composition polymère réticulable comprend au moins 15% en poids du polymère d'oléfine non polaire, par rapport au poids total de la composition polymère réticulable.

11. Câble électrique (1) selon l'une quelconque des revendications précédentes, **caractérisé en ce que** la composition polymère réticulable comprend au moins 50% en poids de polymère(s), par rapport au poids total de la composition polymère réticulable.

12. Câble électrique (1) selon l'une quelconque des revendications précédentes, **caractérisé en ce que** la composition polymère réticulable comprend au plus 30% en poids de polymère(s) polaire(s), par rapport au poids total de polymère(s) dans la composition polymère réticulable.

13. Câble électrique selon l'une quelconque des revendications précédentes, **caractérisé en ce que** la composition polymère réticulable comprend en outre au moins un agent de réticulation.

14. Câble électrique (1) selon l'une quelconque des revendications précédentes, **caractérisé en ce que** la composition polymère réticulable comprend en outre au moins un antioxydant.

15. Câble électrique (1) selon l'une quelconque des revendications précédentes, **caractérisé en ce que** la couche électriquement isolante (4) comprend au moins un polymère d'oléfine.

16. Câble électrique (1) selon l'une quelconque des revendications précédentes, **caractérisé en ce qu'**il comprend en outre une autre couche semi-conductrice (3) entourant l'élément électriquement conducteur allongé (2), et étant entourée par la couche électriquement isolante (4).
